## Europäisches Patentamt
## European Patent Office
## Office européen des brevets

(11) Veröffentlichungsnummer: **0 156 023**
**B1**

(12) ## EUROPÄISCHE PATENTSCHRIFT

(45) Veröffentlichungstag der Patentschrift:
**08.06.88**

(51) Int. Cl.⁴: **G 21 F 7/00**

(21) Anmeldenummer: **84115753.0**

(22) Anmeldetag: **18.12.84**

(54) **Handschuhkasten.**

(30) Priorität: **11.01.84 DE 3400719**

(43) Veröffentlichungstag der Anmeldung:
**02.10.85 Patentblatt 85/40**

(45) Bekanntmachung des Hinweises auf die Patenterteilung:
**08.06.88 Patentblatt 88/23**

(84) Benannte Vertragsstaaten:
**DE FR GB**

(56) Entgegenhaltungen:
**DE-A-2 021 117**
**FR-A-2 254 409**
**FR-A-2 293 288**

(73) Patentinhaber: **ALKEM GMBH, Postfach 110069,
D-6450 Hanau 11 (DE)**

(72) Erfinder: **Lasberg, Ingo, Kälberauer strasse 24,
D-8755 Alzenau (DE)**
Erfinder: **Druckenbrodt, Wolf- Günther, Dr.,
Buchenweg 1a, D-6458 Rodenbach (DE)**

(74) Vertreter: **Mehl, Ernst, Dipl.- Ing., Postfach 22 01
76, D-8000 München 22 (DE)**

LIBER, STOCKHOLM 1988

**Beschreibung**

Die Erfindung betrifft einen Handschuhkasten mit Rohr-und/oder Schlauchleitungen für radioaktive und/oder toxische Flüssigkeiten oder Gase und mit in diese Rohr-und/oder Schlauchleitung eingefügten Absperrarmaturen, die jeweils ein Betätigungsorgan mit Antriebsvorrichtung und einen Armaturkörper aufweisen.

Ein derartiger Handschuhkasten ist bereits in Gebrauch. Bei ihm sind nicht nur die Rohr- und/oder Schlauchleitungen, sondern auch die Absperrarmaturen und die zugehörigen Betätigungsorgane sowie die Antriebsvorrichtungen im Handschuhkasten angeordnet.

Häufig sind die Flüssigkeiten oder Gase in den Rohr-oder Schlauchleitungen nicht nur radioaktiv oder toxisch, sondern auch korrosiv. Deshalb müssen insbesondere die Antriebsvorrichtungen, in der Regel elektrische oder pneumatische Stellmotore, durch besondere Gehäuse aus korrosionsbeständigem Werkstoff wie Edelstahl geschützt sein, um zu verhindern, daß diese Antriebsvorrichtungen beim Auftreten von Leckstellen an den Rohr- oder Schlauchleitungen durch austretende Flüssigkeiten oder Gase beschädigt oder gar zerstört werden.

Ferner sind elektrische Energieversorgungs- und Rückmeldeleitungen erforderlich, die in dem Handschuhkasten zu den Antriebsvorrichtungen verlegt und auch aus dem Handscuhkasten herausgeführt sind. Diese eletrischen Leitungen unterliegen nicht nur der Korrosion, sonder sie verspröden auch unter dem Einfluß in radioaktiver Strahlung und müssen deshalb als korrosions- und strahlungsbeständige Kabel mit einem Isoliermantel aus besonderem Isolierstoff ausgeführt sein. Ferner müssen die Durchführungen für diese Kabel durch die Wand des Handschuhkastens besonders abgedichtet sein.

Der Erfindung liegt die Aufgabe zugrunde, korrosionsempfindliche und damit wartungsintensive Teile in dem Handschukasten zu vermeiden.

Zur Lösung dieser Aufgabe ist ein Handschuhkasten der eingangs erwähnten Art erfindungsgemäß dadurch gekennzeichnet, daß die Absperrarmaturen, von deren Armaturkörper eine das Betätigungsorgantragende Betätigungswelle ausgeht, nebeneinander an einer Wand des Handschuhkastens mit dem Armaturkörper auf der Innenseite und mit dem Betätigungsorgan auf der Außenseite der Wand angeordnet sind und daß diesen Absperrarmaturen eine Antriebsvorrichtung zugeordnet ist, die sich auf der Außenselte der Wand des Handschuhkastens befindet, die mit einer Vorrichtung zum Andocken an das Betätigungsorgan der Absperrarmaturen versehen ist und die in der Wandebene zu jedem dieser Betätigungsorgane verfahrbar geführt ist.

Die Betätigungsorgane der Absperrarmaturen sind durch die Wand des Handschuhkastens hindurch nach außen geführt. Die Durchführungen für diese Betätigungsorgane können ohne Schwierigkeit gas- und flüssigkeitsdicht ausgeführt sein. Antriebsvorrichtungen für diese Absperrarmaturen brauchen innerhalb des Handschuhkastens überhaupt nicht vorhanden zu sein. Für die Antriebsorgane mehrerer Absperrarmaturen braucht auf der Außenseite der Wand des Handscuhkastens nur eine einzige Antriebsvorrichtung vorgesehen zu sein, für die kein besonderes korrosionsfestes Gehäuse erforderlich ist. Das Verfahren der Antriebsvorrichtung zu dem Betätigungsorgan der einzelnen Absperrarmaturen und das Verstellen dieser Betätigungsorgane durch diese Antriebsvorrichtung kann durch eine elektronische Steuereinrichtung so gesteuert werden, daß die Flüssigkeiten oder die Gase nach einem ganz bestimmten Programm in die einzelnen Rohr- oder Schlauchleitungen im Handschuhkasten verteilt werden. Notfalls können die Betätigungsorgane der Absperrarmaturen sogar von Hand verstellt werden, ohne daß das Bedienungspersonal Arbeiten innerhalb des Handschuhkastens ausführen muß und durch radioaktive Strahlung gefährdet werden kann.

Die Verschaltung der einzelnen Absperrarmaturen untereinander durch die Rohr- oder Schlauchleitungen im Handschuhkasten kann besonders übersichtlich erfolgen, wenn die Armaturkörper der Absperrarmaturen auf geraden Hauptrohren sitzen, die parallel zueinander und mit Abstand voneinander auf der Innenseite der Wand des Handschuhkastens angeordnet sind. Die Hauptrohre können Zuleitungs-oder Sammelrohre sein, die z. B. durch die Wand des Handschuhkastens hindurch zu außerhalb des Handschuhkastens befindlichen Behältern geführt sind. Außerdem können die Hauptrohre als Rohrplatten ausgeführt sein, die Bohrungen enthalten und eine ganz bestimmte Schaltung für die Verteilung der sie durchfließenden Flüssigkeiten oder Gase bilden. Die Absperrarmaturen sind auf diesen Rohrplatten besonders leicht dicht montierbar.

Die Erfindung und ihre Vorteile seien anhand der Zeichnung an einem Ausführungsbeispiel näher erläutert:

Fig. 1 zeigt eine perspektivische Ansicht eines Handschuhkastens gemäß der Erfindung von vorn.

Fig. 2 zeigt in perspektivischer Ansicht die Innenseite der Vorderwand des Handschuhkastens nach Fig. 1.

Fig. 3 5zeigt in perspektivischer Ansicht eine Absperrarmatur des Handschuhkastens nach Fig. 1.

Fig. 4 zeigt eine Einzelheit zur Absperrarmatur nach Fig. 3.

Fig. 5 zeigt einen Teilschnitt entsprechend der strichpunktierten Linie V-V in Fig. 1.

Fig. 6 zeigt einen Schnitt entsprechend der strichpunktierten Linie VI-VI in Fig. 5.

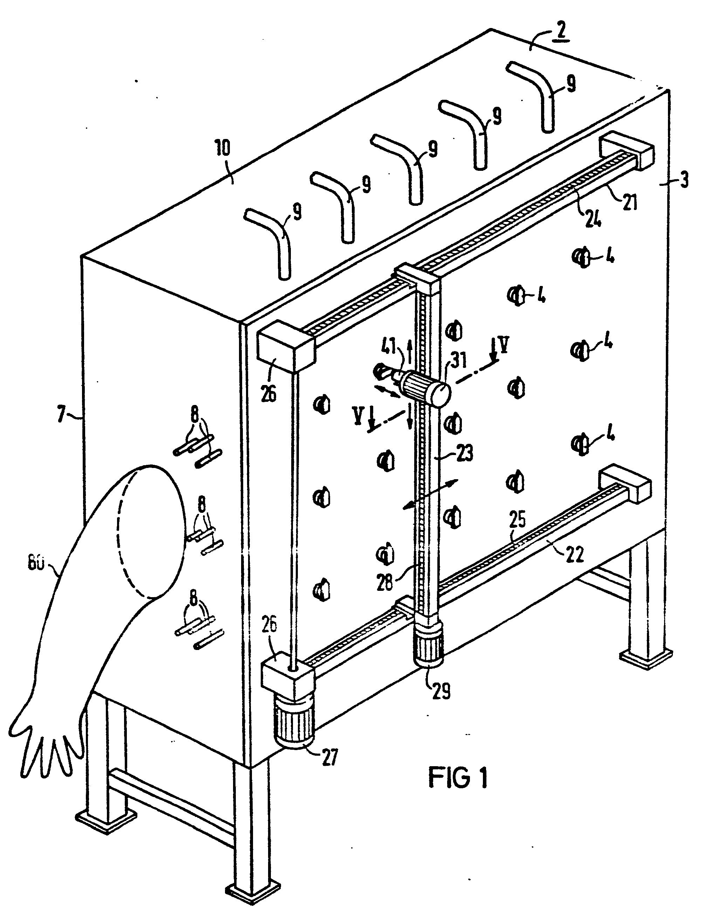

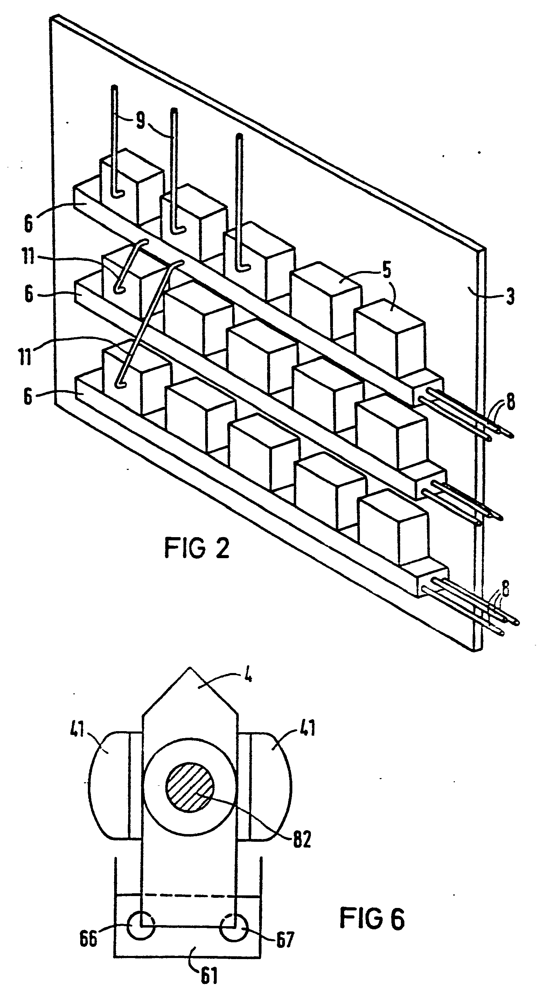

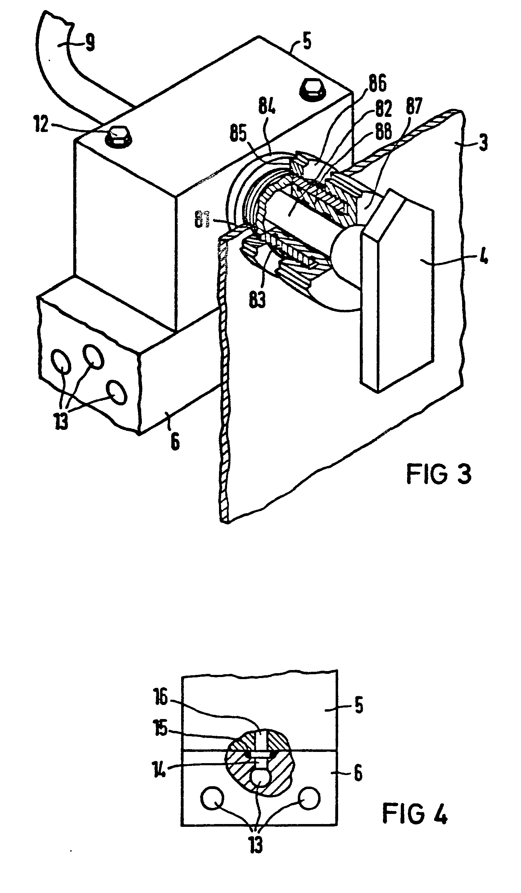

Der Handschuhkasten 2 nach Fig. 1 und 2 weist an einer Durchführung an einer Seitenwand 7 für Arbeiten innerhalb des Handschuhkastens 2 einen Arbeitshandschuh 80 und an der Außenseite seiner Vorderwand 3 Betätigungsorgane 4 aus einem ferromagnetischen Werkstoff von Absperrarmaturen auf, deren Armaturkörper 5 aus Metall bestehen und sich auf der Innenseite der Vorderwand 3, also innerhalb des Handschuhkastens 2 befinden. Diese Armaturkörper 5 sind in drei Gruppen zu jeweils fünf Stück aufgeteilt, und jede Gruppe sitzt auf einem von drei mit Abstand voneinander horizontal angeordneten, zueinander parallelen geradlinigen Hauptrohren 6, die aus Rohrplatten aus Metall bestehen, welche auf der Innenseite der Vorderwand 3 aus Metall des Handschuhkastens 2 mit dieser Vorderwand 3 fest verbunden, z. B. verschraubt sind. Wie Fig.3 zeigt, ist jeweils durch eine Durchführung 81 in der Vorderwand 3 eine Betätigungswelle 82 einer Absperrarmatur geführt. Die Betätigungswelle 82 besteht aus Metall und geht von einem Armaturkörper 5 der Absperrarmatur aus und trägt auf der Außenseite der Vorderwand 3 das Betätigungsorgan 4.

Die Betätigungswelle 82 ist durch einen Stutzen 83 hindurchgeführt, der aus Metall besteht, am Armaturkörper 5 angebracht ist, außen ein Gewinde aufweist und durch die Durchführung 81 auf die Außenseite der Vorderwand 3 greift. Am Armaturkörper 5 ist ein Metallwulst 84 um den Stutzen 83 herum ausgebildet, der satt an der Innenseite der Vorderwand 3 anliegt. Zwischen dem Metallwulst 84 und der Innenseite der Vorderwand 3 befindet sich ein Dichtungsring 85 koaxial zum Stutzen 83, auf dem auf der Außenseite der Vorderwand 3 eine Nutmutter 86 aus Metall sitzt, mit der der Metallwulst 84 fest gegen die Vorderwand 3 verspannt ist, so daß die Durchführung 81 gas- und flüssigkeitsdicht abgedichtet ist.

Außen am Ende des Stutzens 83 auf der Außenseite der Vorderwand 3 ist eine weitere Nutmutter 87 aufgeschraubt, die als Dichtelement ausgebildet und als solches mit einem Hohlzylinder 88 versehen ist, durch den die Betätigungswelle 82 hindurchgeführt ist und mit dem diese Nutmutter 87 in den Stutzen 83 greift. Zwischen der inneren Mantelfläche des Stutzens 83 und der äußeren Mantelfläche des Hohlzylinders 88 sowie zwischen der Mantelfläche der Betätigungswelle 82 und der inneren Mantelfläche des Hohlzylinders 88 sind jeweils zwei sogenante O-Ringe als Dichtungsringe koaxial zum Stutzen 83 mit Abstand voneinander angeordnet, so daß auch der Stutzen 83 innen gas- und flüssigkeitsdicht abgedichtet ist.

Die Nutmutter 87 mit dem Hohlzylinder kann aus elektrisch isolierendem Kunststoff bestehen und an der dem Armaturkörper 5 zugewandten Stirnfläche des Hohlzylinders 88 einen Metallbelag aufweisen, der mit einer nicht dargestellten durch die Wand des Hohlzylinders 88 in Axialrichtung nach außen geführten elektrischen Anschlußleitung versehen ist. Ein solcher Metallbelag mit elektrischer Anschlußleitung bildet eine Lecktestsonde, deren ohmscher und/oder kapazitiver Widerstand zu den Metallteilen des Handschuhkastens 2 absinkt, wenn an einer undichten Stelle zwischen der Betätigungswelle 82 und dem Armaturkörper 5 Lösung austritt.

Die Betätigungsorgane 4 aller Absperrarmaturen sind gleich ausgeführt und bestehen jeweils aus einem streifenförmig ausgeführten, an einem Ende keilförmig auslaufenden Griff. Ein solcher Griff ist jeweils am Ende einer Betätigungswelle 82 auf der Außenseite der Vorderwand 3 und außerhalb des Stutzens 83 rechtwinklig zur Längsachse der Betätigungswelle 82 angebracht. Der Radiusabstand der Spitze am keilförmig auslaufenden Ende dieses Griffes bezüglich der Längsachse der Betätigungswelle 82 ist kleiner als der Radiusabstand der beiden Ecken am anderen Ende dieses Griffes bezüglich der besagten Längsachse. Die Betätigungsorgane 4 auf der Außenseite der Vorderwand 3 sind wie die Armaturkörper 5 auf der Innenseite der Vorderwand 3 in Gruppen zu je fünf Stück jeweils in drei horizontal zueinander parallelen Geraden angeordnet.

An den Enden der durch Rohrplatten gebildeten Hauptrohre 6 sind durch eine Seitenwand 7 des Handschuhkastens 2 nach außen geführte Leitungsrohre 8 und an der Rückseite von Armaturkörpern 5 abgehende Leitungsrohre 9 durch die Deckenwand 10 des Handschuhkastens 2 nach außen geführt. Ferner sind Hauptrohre 6 untereinander oder mit Anschlußstutzen an Armaturkörpern 5 über Verbindungsrohre 11 verbunden, die sich auf der Innenseite der Vorderwand 3, also innerhalb des Handschuhkastens 2 befinden.

Die Armaturkörper 5 sind quaderförmig ausgeführt und liegen jeweils mit ihrer Bodenfläche satt an der Deckfläche der als Rohrplatten ausgeführten Hauptrohre 6 an. Sie sind, wie Fig. 3 zeigt, mit nicht versenkten Sechskantschrauben 12 mit diesen Rohrplatten verschraubt.

Durch die als Rohrplatten ausgeführten Hauptrohre 6 führen drei Längsbohrungen 13 als Kanäle, die in Fig. 3 und 4 erkennbar sind. In Fig. 4 ist eine solche Längsbohrung 13 zu sehen, von der eine Anschlußbohrung 14 ausgeht, die rechtwinklig zu dieser Längsbohrung 13 und zur Deckfläche der das Hauptrohr 6 bildenden Rohrplatte ist und die an der Deckfläche dieser Rohrplatte austritt, die die Dichtseite dieser Rohrplatte zu einem Armaturkörper 5 bildet. An der Deckfläche der Rohrplatte ist ein die Anschlußbohrung 14 umgebender Dichtungsring 15 eingelassen. Mit der Anschlußbohrung 14 in der das Hauptrohr 6 bildenden Rohrplatte fluchtet eine Anschlußbohrung 16 mit gleichem Innendurchmesser, die sich im quaderförmigen Armaturkörper 5 nach Fig. 4 befindet.

An der Außenseite der Vorderwand 3 des Handschuhkastens 2, sind, wie Fig. 1 zeigt, ferner mit Abstand voneinander zwei geradlinige Führungsschienen 21 und 22 angeordnet, die parallel zueinander und zu den Hauptrohren 6 auf der Innenseite der Vorderwand 3 sind und zwischen denen sich die Betätigungsorgane 4 für die Absperrarmaturen befinden. Auf diesen Führungsschienen 21 und 22 sitzt ein Schlitten 23, welcher auf den Führungsschienen 21 und 22 verfahrbar ist. In jeder der beiden Führungsschienen 21 und 22 ist eine zu diesen Führungsschienen parallele Antriebsspindel 24 und 25 gelagert, die beide über eine entsprechende Mutter am Schlitten 23 angreifen. Beide Antriebsspindeln 24 und 25 werden über Winkelgetriebe 26 von demselben Elektromotor 27 angetrieben und können den Schlitten 23 längs der Führungsschienen 21 und 22 hin und her verschieben.

Im Schlitten 23 selbst ist eine Antriebsspindel 28 gelagert, die zu den beiden in den Führungsschienen 21 und 22 gelagerten Antriebsspindeln 24 und 25 rechtwinklig ist und der ein auf dem Schlitten 23 sitzender Elektromotor 29 zum Antreiben zugeordnet ist. Der Schlitten 23 stellt zugleich eine zu den Führungsschienen 21 und 22 rechtwinklige geradlinige Führungsschiene für eine Antriebsvorrchtung 31 dar, an der die Antriebsspindel 28 im Schlitten 23 über eine Mutter angreift und die den Betätigungsorganen 4 der Absperrarmaturen zugeordnet ist. Diese Antriebsvorrichtung 31 ist also mit Hilfe der Elektromotoren 27 und 29 in der Wandebene der Vorderwand 3 zu den Betätigungsorganen 4 verfahrbar geführt.

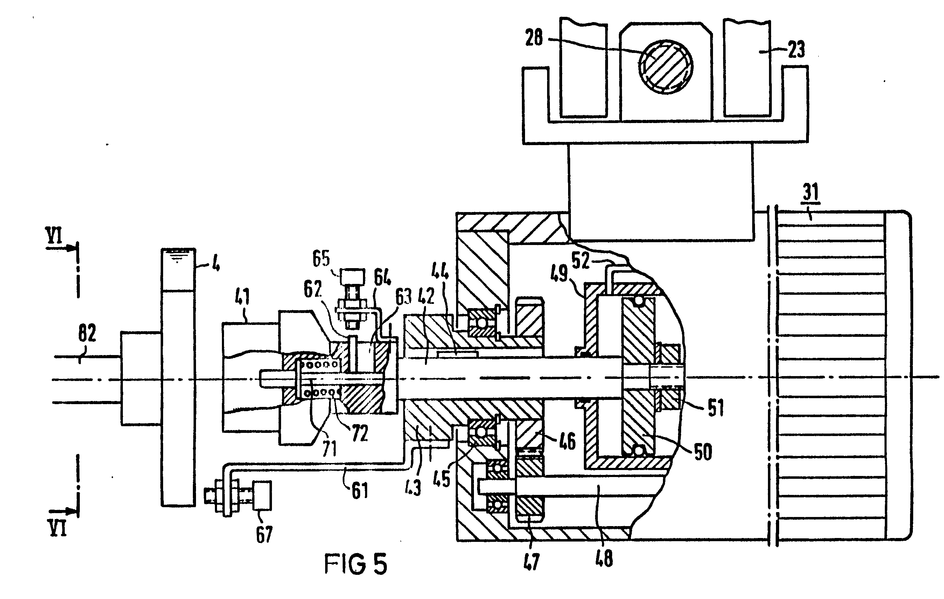

Wie Fig. 5 und 6 zeigen, weist die Antriebsvorrichtung 31 eine Klaue 41 als Vorrichtung zum Andocken dieser Antriebsvorrichtung 31 an ein Betätigungsorgan 4 auf. Diese Klaue 41 sitzt am Ende einer zur Vorderwand 3 des Handschuhkastens 2 rechtwinkligen Welle 42. Diese Welle ist in ihrer Längsrichtung verschiebbar in einer koaxialen Nabe 43 gelagert, mit der sie über einen Mitnehmer 44 drehfest gekoppelt ist. Die Nabe 43 ist über Kugellager 45 im Gehäuse der Antriebsvorrichtung 31 um die Längsachse der Welle 42 drehbar gelagert. Innen im Gehäuse der Antriebsvorrictung 31 ist koaxial zur Längsachse der Welle 42 ein Zahnrad 46 drehfest an der Nabe 43 angebracht. In dieses Zahnrad 46 greift ein Antriebszahnrad 47, das auf einer im Gehäuse der Antriebsvorrichtung 31 kugelgelagerten Welle 48 sitzt, die von einem nicht erkennbaren elektrischen Stellmotor der Antriebsvorrichtung 31 angetrieben wird.

Im Gehäuse der Antriebsvorrichtung 31 befindet sich ferner am anderen Ende der Welle 42 ein Pneumatikzylinder 49, der starr mit dem Gehäuse der Antriebsvorrichtung 31 verbunden ist. Die Welle 42 ist drehbar und in Längsrichtung verschiebbar sowie abgedichtet durch einen Deckel am Zylinderkopf geführt und kraftschlüssig mit einem Kolben 50 im Zylinder 49 verbunden, z. B. mit einer Mutter 51 verschraubt. Beiderseits des Kolbens 50 münden in den Innenraum des Zylinders 49 je eine pneumatische Steuerleitung. Von diesen beiden Steuerleitungen ist nur eine Steuerleitung 52 erkennbar. Durch entsprechendes Beaufschlagen der pneumatischen Steuerleitungen mit Luftdruck kann die Welle 42 in ihrer Längsrichtung hin und her verschoben werden.

Mit der Nabe 43 ist ein Träger 61 verschraubt, auf dem zwei induktiv wirkende Sensoren 66 und 67 zum Erfassen der Stellung des Betätigungsorgans 4 eine Absperrarmatur und zum Anpassen der Position der aus der Klaue 41 bestehenden Vorrichtung zum Andocken an das Betätigungsorgan 4 an diese Stellung sitzen. Diese Sensoren 66 und 67 liegen auf einem Kreis in einer zur Längsachse der Welle 42 rechtwinkligen Ebene um den Durchstoßpunkt der Längsachse der Welle 42 durch diese Ebene. Der Radius dieses Kreises ist gleich dem Abstand, den die beiden Ecken am breiten Ende des als streifenförmiger Griff ausgebildeten Betätigungsorgans 4 von der Drehachse der Betätigungswelle 82 des betreffenden Absperrorgans haben, wenn diese Betätigungswelle 82 mit der Welle 42 fluchtet.

Im Zentrum der Klaue 41 ist ferner fluchtend mit der Welle 42 ein Schaltstift 71 in seiner Längsrichtung gleitend gelagert. Er weist an einem Ende einen zur Längsachse der Welle 42 rechtwinkligen Nockenkörper 62 aus einem ferromagnetischen Werkstoff auf, der sich in einer Längsnut 63 der Klaue 41 befindet. Gegenüber dieser Längsnut 63 ist außen an der Klaue 41 ein Träger 64 mit einem weiteren induktiv wirkenden Sensor 65 zum Erfassen des ordnungsgemäßen Andockens der Antriebsvorrichtung 31 an ein Betätigungsorgan 4 befestigt. Das andere Ende des Schaltstiftes 71 ragt zwischen die beiden Hälften der Klaue 41 und kann gegen die Druckkraft einer Schraubenfeder 72 in die Klaue 41 in Längsrichtung der Welle 42 hineinverschoben werden.

Zum Andocken der Antriebsvorrichtung 31 an ein Betätigungsorgan 4 wird die Antriebsvorrichtung 31 in Steuerabhängigkeit von einer nicht dargestellten Steuereinrichtung, die an den induktiv wirkenden Sensoren 65, 66 und 67 angeschlossen ist und der ein Inkrementalgeber zugeordnet ist, so positioniert, daß die betreffende Betätigungswelle 82 mit der Welle 42 der Antriebsvorrichtung 31 fluchtet. Sodann wird die Welle 42 in Steuerabhängigkeit von der Steuereinrichtung soweit verdreht, bis sich das breite Ende des als Griff ausgebildeten Betätigungsorgans 4 zwischen den beiden induktiv wirkenden Sensoren 66 und 67 befindet. Hierauf werden die pneumatischen Steuerleitungen des Zylinders 49 entsprechend mit Druckluft beaufschlagt, so daß sich die Welle

42 in Längsrichtung auf das Betätigungsorgan 4 zubewegt und dieses als Griff ausgebildete Betätigungsorgan 4 zwischen die beiden Klauenhälften der Klaue 41 gelangt. Schließlich verschiebt dieses als Griff ausgebildete Betätigungsorgan 4 den Schaltstift 71 in die Klaue 41 hinein, so daß der induktiv wirkende Sensor 65 anspricht und der Stellmotor der Antriebsvorrichtung 31 das Betätigungsorgan 4 über die Welle 42 in die neue Sollstellung dreht. Nach Erreichen dieser neuen Sollstellung gibt ein nicht dargestellter, der betreffende Absperrarmatur zugeordneter induktiv wirkender Sensor auf die Steuereinrichtug Signal, so daß der elektrische Stellmotor der Antriebsvorrichtung 31 abgeschaltet, die pneumatischen Steuerleitungen des Zylinders 49 entsprechend Luftdruck beaufschlagt, die Welle 42 in Längsrichtung von dem Betätigungsorgan 4 weggeschoben und die Klaue 41 vom Betätigungsorgan 4 abgekoppelt werden. Nach einem vorgegebenen Programm kann sodann die Antriebsvorrichtung 31 in Steuerabhängigkeit von der Steuereinrichtung zum Betätigungsorgan 4 einer anderen Absperrarmatur verschoben und diese Absperrsarmatur entsprechend betätigt werden.

## Patentansprüche

1. Handschuhkasten mit Rohr- und/oder Schlauchleitungen für radioaktive und/oder toxische Flüssigkeiten oder Gase und mit in diese Rohr- und/oder Schlauchleitungen eingefügten Absperrarmaturen, die jeweils ein Betätigungsorgan mit Antriebsvorrichtung und einen Armaturkörper aufweisen, dadurch gekennzeichnet, daß die Absperrarmaturen, von deren Armaturkörper (5) eine das Betätigungsorgan (4) tragende Betätigungswelle (82) ausgeht, nebeneinander an einer Wand (3) des Handschuhkastens (2) mit dem Armaturkörper (5) auf der Innenseite und mit dem Betätigungsorgan (4) auf der Außenseite der Wand (3) angeordnet sind und daß diesen Absperrarmaturen eine Antriebsvorrichtung (31) zugeordnet ist, die sich auf der Außenseite der Wand (3) des Handschuhkastens (2) befindet, die mit einer Vorrichtung (41) zum Andocken an das Betätigungsorgan (4) der Absperrarmaturen versehen ist und die in der Wandebene zu den Betätigungsorganen (4) verfahrbar geführt ist.

2. Handschuhkasten nach Anspruch 1, dadurch gekennzeichnet, daß die Armaturkörper (5) der Absperrarmaturen auf geraden Hauptrohren (6) sitzen, die parallel zueinander und mit Abstand voneinander auf der Innenseite der Wand (3) des Handschuhkastens (2) angeordnet sind.

3. Handschuhkasten nach Anspruch 1, dadurch gekennzeichnet, daß die Antriebsvorrichtung (31) einen Sensor (66, 67) um Erfassen der Stellung des Betätigungsorgans (4) einer Absperrarmatur und eine Steuereinrichtung zum Anpassen der Position der Vorrichtung (41) zum Andocken an das Betätigungsorgan (4) an diese Stellung aufweist.

4. Handschuhkasten nach Anspruch 1, dadurch gekennzeichnet, daß die Vorrichtung (41) zum Andocken an das Betätigungsorgan (4) einen Sensor (65) zum Erfassen des ordnungsgemäßen Andockens der Antriebsvorrichtung (31) an das Betätigungsorgan (4) aufweist.

## Claims

1. Glove box with pipe and/or hose lines for radioactive and/or toxic liquids or gases and with shut-off fittings inserted in these pipe and/or hose lines which in each case have an actuating mechanism with driving device and a fitting body,
characterised in that the shut-off fittings, from the fitting body (5) of which there emanates an actuating shaft (82) carrying the actuating mechanism (4), are arranged next to each other on a wall (3) of the glove box (2) with the fitting body (5) on the inner side and with the actuating mechanism (4) on the outer side of the wall (3) and that to these shut-off fittings there is allocated a driving device (31) which is located on the outer side of the wall (3) of the glove box (2), which is provided with a device (41) for docking to the actuating mechanism (4) of the shut-off fittings and which is led in a mobile manner on the plane of the wall to the actuating mechanisms (4).

2. Glove box according to claim 1, characterised in that the fitting bodies (5) of the shut-off fittings sit on straight main pipes (6), which are arranged parallel to each other and spaced from each other on the inner side of the wall (3) of the glove box (2).

3. Glove box according to claim 1, characterised in that the driving device (31) has a sensor (66, 67) for detecting the position of the actuating mechanism (4) of a shut-off fitting and a control apparatus for adjusting the position of the device (41) for docking to the actuating mechanism (4) at this position.

4. Glove box according to claim 1, characterised in that the device (41) for docking to the actuating mechanism (4) has a sensor (65) for detecting the correct docking of the driving device (31) to the actuating mechanism (4).

## Revendications

1. Boîte à gants comportant des conduites tubulaires et/ou des conduites souples pour des liquides ou des gaz radioactifs et/ou toxiques et des dispositifs de sectionnement, qui sont insérés dans ces conduites tubulaires et/ou dans ces conduites souples et possèdent chacun un corps et un organe d'actionnement muni d'un dispositif d'entraînement, caractérisée par le fait que les dispositifs de sectionnement, à partir du corps (5) desquels s'étend un arbre d'actionnement (82) portant l'organe d'actionnement (4), sont disposés côte-à-côte sur une paroi (3) de la boîte à gants (2), le corps (5) de ces dispositifs étant situé sur le côté intérieur de la paroi (3) et l'organe d'actionnement (4) étant situé sur le côté extérieur de cette paroi, et qu'à ces dispositifs de sectionnement est associé un dispositif d'entraînement (31) qui est situé sur la face extérieure de la paroi (3) de la boîte à gants (2), qui est équipée d'un dispositif (41) permettant un accrochage sur l'organe d'actionnement (4) des dispositifs de sectionnement et est guidée dans le plan de la paroi de manière à être déplaçable par rapport aux organes d'actionnement (4).

2. Boîte à gants suivant la revendication 1, caractérisée par le fait que les corps (5) des dispositifs de sectionnement reposent sur des tubes rectilignes principaux (6), qui sont parallèles entre eux et sont disposés à distance les uns des autres sur la face intérieure de la paroi (3) de la boîte à gants (2).

3. Boîte à gants suivant la revendication 1, caractérisée par le fait que le dispositif d'entraînement (31) contient un capteur (66, 67) servant à détecter la position de l'organe d'actionnement (4) d'un dispositif de sectionnement et un dispositif de commande permettant d'adapter la position du dispositif (41) pour son accrochage, en cet emplacement, à l'organe d'actionnement (4).

4. Boîte à gants suivant la revendication 1, caractérisée par le fait que le dispositif (41) permettant l'accrochage sur l'organe d'actionnement (4) comporte un capteur (65) servant à détecter l'accrochage correct du dispositif d'entraînement (31) sur l'organe d'actionnement (4).

FIG 1

FIG 2

FIG 6

0 156 023

FIG 3

FIG 4

5

FIG 5